# EUROPEAN PATENT APPLICATION

(11) **EP 1 835 559 A2**
(43) Date of publication of application: **19.09.2007**
(21) Application number: 06126179.8
(22) Date of filing: 14.12.2006
(51) Int. Cl.: H01M 8/04

(54) **Approach of solving humidification device turndown ratio for proton exchange membrane fuel cells**

(30) Priority: 17.03.2006 US 378515
(71) Applicant: Honeywell International Inc., Morristown, NJ 07962 (US)
(72) Inventor: Liu, Chung Y, Cerritos, CA 90703 (US); Ahle, Karen M, Manhattan Beach, CA 90266 (US); Loeffelholz, David W., Long Beach, CA 90815 (US)
(74) Representative: Haley, Stephen

(57) **Abstract**

An apparatus and method for controlling humidification device turndown ratio for proton exchange membrane fuel cells includes a proton exchange membrane fuel cell, a humidifier, a water separator for directing water vapor from the proton exchange membrane fuel cell to the humidifier, a bypass valve to regulate vapor flow into the humidifier, a turbo-compressor and control valve for regulating temperature of air flow into the humidifier, and an expansion turbine for recovery of energy from the humidifier and bypass valve.

## Description

This invention was made with Government support under contract DE-FC36-03G013109 awarded by the United States Department of Energy, The Government has certain rights in this invention.

The present invention relates generally to humidification device turndown ratio for proton exchange membrane fuel cells and, more particularly to a system method to regulate water vapor flow or concentration to a humidification device from a fuel cell cathode, thus enabling a peak-power sized humidification device to meet performance requirements at various fuel cell power levels.

Proton exchange membrane power cells require the use of a humidifier to prevent the fuel cells from drying out. The humidifier is typically designed to work most efficiently at peak power production conditions. However, existing proton exchange membrane power cell systems lose efficiency when the humidifier is used at less than peak power production, resulting in less efficient power production.

U.S. Patent Application No. 2005/0247618 provides use of a membrane device as a water vapor transfer device for humidifying proton exchange membrane fuel cell supply streams. This device does not provide regulation of vapor to the membrane device and does not provide routing of cathode exhaust through an energy recovery system such as an expansion turbine to recover energy and reduce parasitic power loss,

U.S. Patent No. 5,543,238 provides a proton exchange membrane fuel cell air humidification system that utilizes a compressor to provide fresh air, a second compressor to feed a part of the cathode exhaust back to a fresh air supply line, and an adjusting element to re-rirculate the other part of the cathode exhaust to a turbine for power recovery. A drawback is that this device requires the use of multiple compressors and transfers water in both liquid and vapor form back into the fresh air stream. The presence of water droplets can compromise vapor transfer and puddle resulting in increased pressure drop.

U.S. Patent Application No. 2005/0260480 discloses a fuel reformer and proton exchange membrane stack limited to mid-stage injection of recycle gas. It utilizes a two stage positive displacement compressor. This device does not provide for handling liquid water or conservation of work in the compressor except for burning incomplete combustion byproducts to provide heat for a fuel processor. As stated previously, the presence of water droplets can compromise vapor transfer and puddle resulting in increased pressure drop.

As can be seen, there is a need for pre-treatment of pressurized vapor flow into the humidifier associated with a proton exchange membrane fuel cell to permit the humidifier to work at peak design efficiency at both peak power and lower power operation conditions. Further, if the cathode exhaust is re-circulated to the humidifier, there is a need to prevent water build-up in the system. Even further, there is a need to minimize parasitic energy requirements to improve efficiency of the proton exchange membrane fuel cell system.

In one aspect of the present invention, an apparatus for controlling humidification device turndown ratio for proton exchange membrane fuel cells comprises a proton exchange membrane fuel cell having a cathode exhaust; a humidifier in fluid communication with the cathode exhaust of the proton exchange membrane fuel cell; a humidification control system operationally coupled to the humidifier and the proton exchange membrane fuel cell for regulating humidity of flow into the humidifier; and a temperature control system for regulating temperature and air pressure of flow into the humidifier; and wherein the humidification control system includes a water separator for removing condensation from a cathode exhaust flow from the proton exchange membrane fuel cell to a water tank; and wherein the cathode exhaust flow flows from the water separator to the humidifier.

In another aspect of the present invention, an apparatus for controlling humidification device turndown ratio for proton exchange membrane fuel cells comprises a proton exchange membrane fuel cell having a cathode exhaust flow, a water separator coupled to the proton exchange membrane fuel cell for receiving the cathode exhaust flow, wherein the water separator removes liquid water from the cathode exhaust flow; a humidifier operationally coupled to the proton exchange membrane fuel cell to provide humidity to the proton exchange membrane fuel cell; wherein the cathode exhaust flow flows from the water separator to the humidifier; a bypass control valve coupled between the water and the humidifier for regulating vapor flow to the humidifier; and a controller operationally coupled to the bypass control valve.

In yet another aspect of the present invention, an apparatus for controlling humidification device turndown ratio for proton exchange membrane fuel cells comprises a proton exchange membrane fuel cell; a humidifier; a humidification control system operationally coupled to the humidifier and the proton exchange membrane fuel cell for regulating humidity of flow into the humidifier, and a temperature control system for regulating temperature and air pressure of flow into the humidifier, and wherein the temperature control system includes an expansion turbine; wherein the humidification control system includes a bypass control valve for regulating water vapor flow to the humidifier, the bypass control valve being coupled to the expansion turbine.

In still another aspect of the present invention, a method for controlling humidification device turndown ratio for proton exchange membrane fuel cells comprises the steps of removing water from water vapor in a cathode exhaust flow from a proton exchange membrane fuel cell; directing the water vapor in the cathode exhaust flow to a humidifier; directing excess water vapor in the cathode exhaust flow to an expansion turbine through a bypass control valve; heating and pressurizing air flow to the humidifier using a turbo-compressor and turbo-compressor flow control valve; and controlling operation of the bypass control valve using a controller operationally coupled to the bypass control valve and temperature and air pressure sensors measuring pressurized air flow from the turbo-compressor.

These and other features, aspects and advantages of the present invention will become better understood With reference to the following drawings, description and claims.

Figure 1 is a schematic view of a proton exchange membrane fuel cell system according to the present invention;

Figure 2 is a graphical representation of the relationship between opening of the bypass control valve and air pressure or fuel cell power level according to the present invention; and

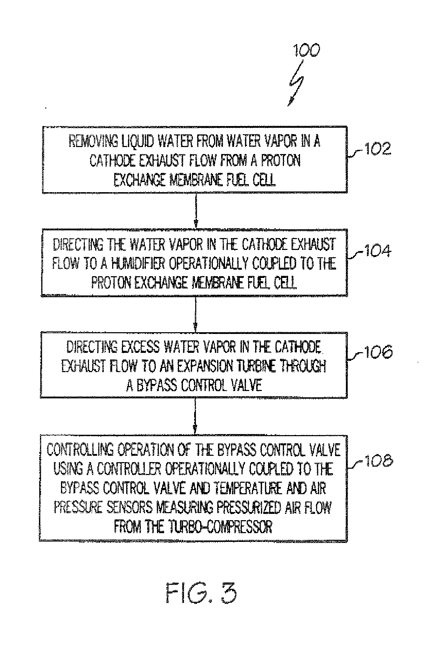

Figure 3 is a flow chart of a method of controlling humidification device turndown ratio for proton exchange membrane fuel cells.

The following detailed description is of the best currently contemplated modes of carrying out the invention. The description is not to be taken in a limiting sense, but is made merely for the purpose of illustrating the general principles of the invention, since the scope of the invention is best defined by the appended claims.

The present invention may be used in, but not limited to use in, pressurised automotive proton exchange membrane fuel cells and other applications in which a proton exchange membrane fuel cell may be utilized.

Briefly, the present invention provides a proton exchange membrane fuel cell system comprising a proton exchange membrane fuel cell, a humidifier, a water separator for directing water vapor from the proton exchange membrane fuel cell to the humidifier, a bypass valve to regulate vapor flow into the humidifier, a turbo-compressor and control valve for regulating temperature of air flow into the humidifier, and an expansion turbine for recovery of energy from the humidifier and bypass valve. Unlike the prior art, which does not use a water separator and bypass control valve to pre-treat air flow into the humidifier, the present invention offers pre-treatment of air flow into the humidifier for both temperature and vapor level to permit the humidifier to be used at peak performance conditions when the proton exchange membrane fuel cell is at less than peak levels of use. Further, the present invention is structurally arranged to divert all cathode exhaust water vapor back to the humidifier or to an expansion turbine.

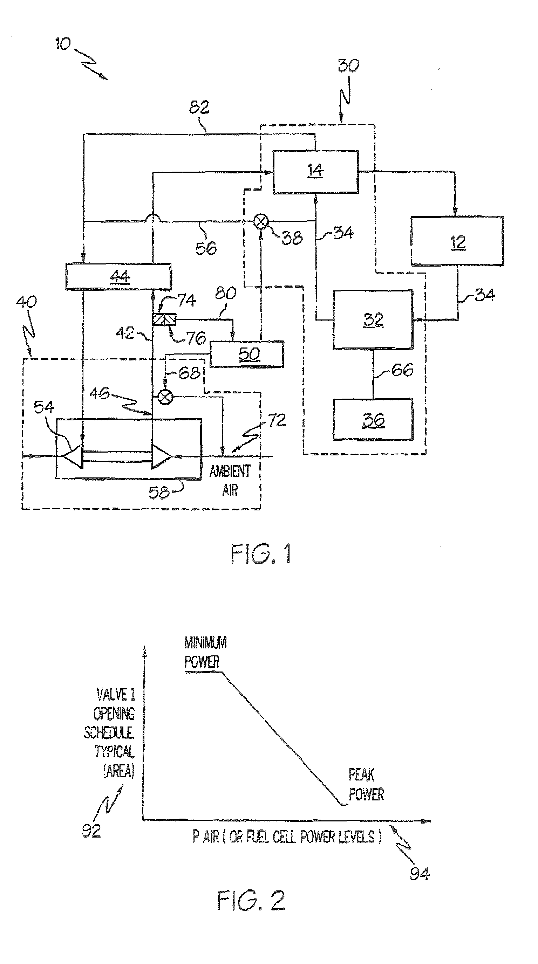

With reference to Figure 1, a proton exchange membrane fuel cell system 10 may comprise a proton exchange membrane fuel cell 12, a humidifier 14, and a humidification control system 30 operationally coupled to the humidifier 14 for regulating humidity of air flow into the humidifier 14. The humidifier 14 may be in fluid communication with a cathode exhaust flow 34 from the proton exchange membrane fuel cell 12. The humidification control system 30 may include a water separator 32 for removing condensation from the cathode exhaust flow 34. The condensation removed may be stored in a water tank 36. The water separator 32 may direct vapor flow from the cathode exhaust flow 34 flowing from the proton exchange membrane fuel cell 12 to the humidifier 14 where it may then be re-circulated back to the proton exchange membrane fuel cell 12. A bypass control valve 38 may be coupled between the water separator 32 and the humidifier 14 for facilitating removal of excess water vapor from the cathode exhaust flow 34.

A controller 50 may be operationally coupled to the bypass control valve 38 for controlling removal of excess water vapor from the vapor flow 52 from the water separator 32. The bypass control valve 38 may be coupled to an expansion turbine 54 operationally coupled to the humidifier 14 for recapturing energy from excess water vapor 56 to diminish parasitic energy requirements.

A temperature control system 40 may be provided for regulating temperature and air pressure of flow into the humidifier 14. The temperature control system may include a turbo-compressor 58 to provide heated pressurized air flow 42 to the humidifier 14. An expansion turbine 54 may be operationally coupled to the turbo-compressor 58 for energy recovery.

A recuperator 44 may be coupled between the turbo-compressor 58 and the humidifier 14. The bypass control valve 38 may be fully closed at peak power operation such that all water vapor in the cathode exhaust flow 34 flows through the humidifier 14. Air pressure from the turbo-compressor 58 may be used as an input signal for the controller 50 to determine an opening schedule for the bypass control valve 38.

In an aspect of the invention, the proton exchange membrane fuel cell 12 may have a cathode exhaust flow 34 and a water separator 38 coupled to the proton exchange membrane fuel cell 12. The water separator 38 may receive the cathode exhaust flow 34 and separate liquid water 66 from the cathode exhaust flow 34. A water tank 36 may be coupled to the water separator 32 for receiving water 66 separated from the cathode exhaust flow 34. A humidifier 14 may be operationally coupled to the proton exchange membrane fuel cell 12 for providing humidity to the proton exchange membrane fuel cell 12 thus preventing the proton exchange membrane fuel cell 12 from drying out. The water separator 32 may be coupled to the humidifier 14 for directing water vapor in the cathode exhaust flow 34 to the humidifier 14. A bypass control valve 38 may be coupled between the water separator 32 and the humidifier 14 for regulating vapor flow in the cathode exhaust flow 34 to the humidifier 14. A controller 50 may be operationally coupled to the bypass control valve 38 for controlling the bypass control valve 38 to regulate vapor flow 52 to the humidifier 14. Thus, humidity in the form of the vapor flow 38 may be provided to the humidifier 14 at an optimal working level to improve efficiency of the humidifier 14.

A turbo-compressor 58 may be coupled to the humidifier 14 to provide pressurized heated air flow to the humidifier 14. A turbo-compressor flow control valve 68 may be coupled to an exhaust flow 46 from the turbo-compressor 58 such that the turbo-compressor flow control valve 68 is positioned between the turbo-compressor 58 and the humidifier 14. The turbo-compressor flow control valve 68 may be coupled to an inlet 72 of the turbo-compressor 58 such that flow passing through the turbo-compressor flow control valve 68 may be directed into the turbo-compressor 58. The turbo-compressor flow control valve 68 may be coupled to the controller 50 for regulating temperature of flow from the turbo-compressor 58 to the humidifier 14. The turbo-compressor flow control valve 68 may be operationally coupled to the controller 50 for controlling operation of the turbo-compressor flow control valve 68. An air temperature sensor 74 may be positioned to read an air temperature of air flow 42 from the turbo-compressor 58. The air temperature sensor 74 may be operationally coupled to the controller 50 to facilitate control of the turbo-compressor flow control valve 68. Thus, flow may be re-circulated through the turbo-compressor 58 repeatedly until an optimal working temperature is obtained and passed on to the humidifier 14 by dosing the turbo-compressor flow control valve.

An air pressure sensor 76 may be positioned to read an air pressure of flow from the turbo-compressor 58. The air pressure sensor 76 may be operationally coupled to the controller 50 to facilitate control of the bypass control valve 38. Alternately, a combined temperature and air pressure sensor may also be utilized and coupled to the controller 50. The air pressure of flow from the turbo-compressor 58 may be used as an input signal 80 for the controller 50 to determine an opening schedule for the bypass control valve 38 proportional to the air pressure of flow from the turbo-compressor 58.

The bypass control valve 38 may be fully closed at peak power operation such that all water vapor flow 52 from the cathode exhaust flow 34 flows through the humidifier 14 at the peak power operation. The bypass control valve 38 may be fully open at a minimum power operation. Figure 2 provides a general graphical representation of the relationship of bypass control valve openness 92 and air pressure or fuel cell power level 94.

An expansion turbine 54 may be provided and coupled to the bypass control valve 38 to recover energy from water vapor 56 passing through the bypass control valve 38. The humidifier 14 may outlet excess humidity 82 to the expansion turbine 54 which may be operationally coupled to turbo-compressor 58, which in turn may be operationally coupled to the humidifier 14 for recapturing energy to reduce parasitic energy requirements. The bypass control valve 38 may be fully closed at peak power operation such that all water vapor flow 52 from the cathode exhaust flow 34 flows through the humidifier 14.

in an aspect of the invention to reduce parasitic energy requirements, a proton exchange membrane fuel cell system 10 for controlling humidification device turndown ratio for proton exchange membrane fuel cells may comprise a proton exchange membrane fuel cell 12, a humidifier 14, and a humidification control system 30 operationally coupled to the humidifier 14 and the proton exchange membrane fuel cell 12 for regulating humidity of flow into the humidifier 14. A temperature control system 40 may be provided for regulating temperature and air pressure of flow into the humidifier 14. The temperature control system 40 may include an expansion turbine 54. The humidification control system 30 may include a bypass control valve 38 for regulating water vapor flow 52 to the humidifier 14. The bypass control valve 38 may be coupled to the expansion turbine 54 to recover energy. A controller 50 may be operationally coupled to the bypass control valve 38 for adjusting the bypass control valve 38 to control the water vapor flow 52 provided to the humidifier 14. The bypass control valve 38 may be fully closed at peak power operation such that all water vapor flow 52 from the cathode exhaust flow 34 flows through the humidifier 14. The humidifier 14 may outlet excess humidity 82 to the expansion turbine 54 for recapturing energy to reduce parasitic energy requirements.

A method 100 for controlling humidification device turndown ratio for proton exchange membrane fuel cells according to the present invention may include a step 102 of removing liquid water from water vapor in a cathode exhaust flow from a proton exchange membrane fuel cell and a step 104 of directing the water vapor in the cathode exhaust flow to a humidifier operationally coupled to the proton exchange membrane fuel cell. The method 100 may further comprise a step 106 of directing excess water vapor in the cathode exhaust flow to an expansion turbine through a bypass control valve and a step 108 of controlling operation of the bypass control valve using a controller operationally coupled to the bypass control valve and temperature and air pressure sensors measuring pressurized air flow from the turbo-compressor.

As can be appreciated by those skilled in the art, the present invention provides an improved apparatus and method for controlling humidification device turndown ratio for proton exchange membrane fuel cells. The present invention provides pre-treatment of flow into the humidifier to maintain optimal conditions for the humidifier under a range of operational power levels for the proton exchange membrane fuel cell. The present invention provides water separation to remove water droplets to prevent puddling, membrane blinding, and blockage of vapor transfer all of which reduce efficiency of the system. Further, the present invention provides recirculation of excess water vapor and excess humidity from the humidifier to an expansion turbine to maximize energy recovery and reduce parasitic energy loss.

It should be understood, of course, that the foregoing relates to exemplary embodiments of the invention and that modifications may be made without departing from the spirit and scope of the invention as set forth in the following claims.

## Claims

1. An apparatus for controlling humidification device turndown ratio for proton exchange membrane fuel cells comprising:
a proton exchange membrane fuel cell (12) having a cathode exhaust flow (34);
a humidifier (14) in fluid communication with said cathode exhaust flow (34) of said proton exchange membrane fuel cell (12);
a humidification control system (30) operationally coupled to said humidifier (14) and said proton exchange membrane fuel cell (12) for regulating humidity of flow into said humidifier (14); and
wherein said humidification control system (30) includes a water separator (32) for removing condensation from said cathode exhaust flow (34); and
wherein said cathode exhaust flow (34) flows from said water separator (32) to said humidifier (14).

2. The apparatus of claim 1, said humidity control system (30) further comprising:
a bypass control valve (38) coupled between said water separator (32) and said humidifier (14) for facilitating removal of excess water vapor (56) from said cathode exhaust flow (34) to said humidifier (14),

3. The apparatus of claim 2, further comprising:
a controller (50) operationally coupled to said bypass control valve (38) for controlling removal of excess water vapor (56) from said cathode exhaust flow (34) to said humidifier (14).

4. The apparatus of any of claims 2-3 wherein said bypass control valve (38) is coupled to an expansion turbine (54) operationally coupled to said humidifier (14) for recapturing energy from said excess water vapor (56).

5. The apparatus of any of claims 2-4 wherein said bypass control valve (38) is fully closed at peak power operation such that all water vapor from said cathode exhaust flow (34) flows through said humidifier (14).

6. The apparatus of any of claims 2-5, further comprising:
a temperature control system (40) for regulating temperature and air pressure of flow into said humidifier (14); and
wherein said temperature control system (40) further includes a turbo-compressor (58) that provides heated pressurized air flow (42) to said humidifier (14); and
wherein air pressure from said turbo-compressor (58) is used as an input signal (80) for the controller (50) to determine an opening schedule for said bypass control valve (38).

7. The apparatus of any of claims 2-6 wherein said humidifier (14) outlets excess humidity to an expansion turbine (54) operationally coupled to a turbo-compressor (58) operationally coupled to said humidifier (14) for recapturing energy to reduce parasitic energy requirements.

8. The apparatus of any of claims 6-7 wherein said temperature control system (40) further includes a turbo-compressor (58) that provides heated pressurized air flow (42) to said humidifier (14).

9. The apparatus of any of claims 7-8 further comprising:
a recuperator (44) coupled between said turbo-compressor (58) and said humidifier (14).

10. The apparatus of any of claims 2-9 further comprising:
an expansion turbine (54), said bypass control valve (38) being coupled to said expansion turbine (34) to recover energy from water vapor passing through said bypass control valve (38).
